# EUROPEAN PATENT SPECIFICATION

(11) **EP 0 509 294 B1**
(45) Date of publication and mention of the grant of the patent: **14.05.1997**
(21) Application number: 92105317.9
(22) Date of filing: 27.03.1992
(51) Int. Cl.: C08F 4/622, C08F 10/00

(54) **Cyclopentadienyl group 6b metal-alpha-olefin polymerization catalysts and process for polymerizing alpha-olefins**
Cyclopentadienylgruppe enthaltende Alpha-Olefin-Polymerisationskatalysatoren auf Basis eines Metals der 6B-Gruppe und Verfahren zur Polymerisation von Alpha-Olefinen
Catalyseur de polymérisation d'alpha oléfin à base de composé de métal de groupe 6B contenant des groupes cyclopentadiényl et procédé de polymerisation d'alpha oléfins

(30) Priority: 29.03.1991 US 677725
(43) Date of publication of application: 21.10.1992
(73) Proprietor: CHEVRON U.S.A. Inc., Philadelphia Pennsylvania 19103 (US)
(72) Inventor: Carney, Michael J., Kingwood, Texas 77339 (US); Beach, David L., Kingwood, Texas 77345 (US)
(74) Representative: Abrams, Michael John

(56) References cited:
- EP-A- 0 295 312
- GB-A- 1 253 063
- US-A- 4 424 139
- JOURNAL OF THE AMERICAN CHEMICAL SOCIETY. vol. 113, no. 3, 30 January 1991, GASTON, PA US pages 893 - 902; B.J.THOMAS: 'Paramagnetic Alkylchromium Compounds as Homogeneous Catalyst for the Polymerization of Ethylene'

## Description

### FIELD OF THE INVENTION

The present invention relates to catalyst systems for polymerizing alpha-olefins and processes for polymerizing alpha-olefins using such catalysts.

### BACKGROUND OF THE INVENTION

Chromium based catalysts are used in the commercial polymerization of small alpha-olefins such as ethylene and propylene. One such catalyst is prepared by depositing chromocene (bis(cyclopentadienyl) chromium (II)) on an inorganic metal oxide support, as disclosed in British Patent No. 1,253,063 to Karapinka. U.S. Patent No. 4,015,059, issued March 29, 1977 to Karol, describes the use of bis(indenyl)- and bis(flourenyl)-chromium (II) compounds supported on activated inorganic oxide supports as catalysts for the polymerization of ethylene.

Recently, new synthetic methods have been described for preparing Cr⁺³ organometallic compounds. Theopold, J. Am. Chem. Soc. (1988), 110, 5902 entitled "Cationic Chromium (III) Alkyls as Olefin Polymerization Catalysts", Theopold, Acc. Chem. Res. (1990), 23, 263 entitled "Organochromium (III) Chemistry: A Neglected Oxidation State" and Thomas et al., J. Amer. Chem. Soc., 113 (1991), p. 893 et seq. disclose that certain pentamethylcyclopentadienyl chromium (III) alkyls can be prepared, and that they can be used for making polyethylene homogeneously in CH₂Cl₂. However, these homogeneous Cr (III) polymerization catalysts have several deficiencies. These include low polymer productivity, rapid deactivation, and the need to use polar, non-coordinating solvents. Additionally, since they are homogeneous catalysts, they are unsuitable for gas phase olefin polymerizations.

U.S. Patent No. 4,530,914, issued July 23,1985 to Ewen et al., discloses a catalyst system for the polymerization of alpha-olefins which comprises two or more metallocenes, each having different propagation and termination rate constants, and aluminoxane. The metallocenes are cyclopentadienyl derivatives of a transition metal of Group 4b, 5b, and 6b metals of the Periodic Table. They are described by the formulas (C₅R'ₘ)ₚR''ₛ(C₅R'ₘ)MeQ₃₋ₚ and R''ₛ(C₅R'ₘ)₂MeQ' where (C₅R'ₘ) is a cyclopentadienyl or substituted cyclopentadienyl, each R' is hydrogen or a hydrocarbyl radical, R'' is an alkylene radical, a dialkyl germanium or silicon or an alkyl phosphine or amine radical bridging two (C₅R'ₘ) rings, Q is a hydrocarbon radical, Me is a Group 4b, 5b, or 6b metal, s is 0 or 1, p is 0, 1, or 2; when p=0, s=0; m is 4 when s is 1 and m is 5 when s is 0.

U.S. Patent No. 4,939,217, issued July 3, 1990 to Stricklen, also discloses a process for polymerizing olefins where the polymerization is conducted in the presence of hydrogen, and a catalyst system is used which contains aluminoxane and at least two metallocenes, each having different olefin polymerization termination rate constants. The metallocenes disclosed are similar to those described in aforementioned U.S. Patent No. 4,530,914.

U.S. Patent No. 4,975,403, issued December 4, 1990 to Ewen, discloses a catalyst system for use in the polymerization of olefins. The catalyst system includes at least two different chiral, stereo-rigid metallocene catalysts of the formula R"(C₅(R')₄)₂MeQₚ (where Me is a Group 4b, 5b or 6b metal and (C₅(R')₄) is a cyclopentadienyl or substituted cyclopentadienyl ring) and an aluminum compound.

Canadian Patent Application No. 2,000,567, published April 13, 1990, discloses a process for producing polyethylene using a composite catalyst made up of a solid catalyst component typified by a selected chromium compound, a modified aluminum compound typified by a trialkylaluminum, and an alkylaluminum alkoxide compound. The chromium compound may be chromium oxide, and the modified aluminum compound may be the reaction product of an organoaluminum compound and water.

It has now been discovered that when cyclopentadienyl Group 6b metal hydrocarbyl compounds, in which the Group 6b metal is in an oxidation state of +3, are supported on inorganic metal oxide or inorganic metal phosphate supports, high productivity alpha-olefin polymerization catalysts are produced, and that the use of a co-catalyst improves the productivity of many of these compounds.

### SUMMARY OF THE INVENTION

In accordance with the present invention, there is provided a catalyst system for the homopolymerization and copolymerization of alpha-olefins having 2-8 carbon atoms, said catalyst system comprising a cyclopentadienyl chromium metal hydrocarbyl compound in which the chromium has an oxidation state of +3, said chromium compound being supported on an inorganic support, said catalyst system having additionally an aluminoxane co-catalyst.

Further provided in accordance with the present invention is a process for the homopolymerization or copolymerization of alpha-olefins having 2-8 carbon atoms comprising polymerizing said alpha-olefin, or copolymerizing two or more alpha-olefins in the presence of a catalyst system comprising a cyclopentadienyl chromium metal hydrocarbyl compound in which the chromium has an oxidation state of +3, said chromium compound being supported on an inorganic support, and said catalyst system further comprising an aluminoxane co-catalyst.

In the above catalyst systems and processes, alumina aluminum phosphate are preferred supports.

### BRIEF DESCRIPTION OF THE FIGURES

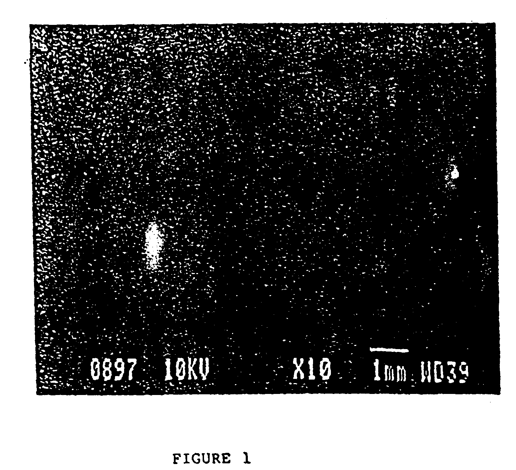

Figures 1, 2 and 3 each show scanning electron micrographs of polyethylene samples.

### DETAILED DESCRIPTION OF PREFERRED EMBODIMENTS

The present invention provides catalyst systems for use in the polymerization (either homopolymerization or copolymerization) of alpha-olefins, including ethylene, propylene, 1-butene, 1-hexene and 4-methyl-1-pentene.

It has quite surprisingly been found that, even though the productivity of many cyclopentadienyl chromium hydrocarbyl compounds is quite low when employed as catalyst in the homogeneous polymerization of alpha-olefins, when these compounds are supported on an inorganic metal oxide or inorganic phosphate solid support with an aluminoxane co-catalyst, their productivity increases dramatically. While the catalyst systems of the present invention can be used to polymerize a variety of alpha-olefins, they are especially useful in the polymerization of ethylene. These catalysts produce polyethylene in high yield, and the polymers produced have remarkably uniform particle size and highly desirable morphology (i.e., substantially spherical) that is suitable for gas phase polymerizations. In addition, the catalyst systems of this invention produce polyethylene with a variety of molecular weight distributions, depending on the support used.

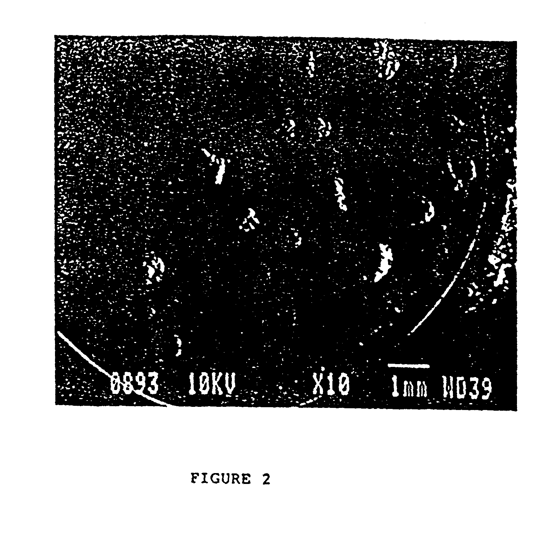

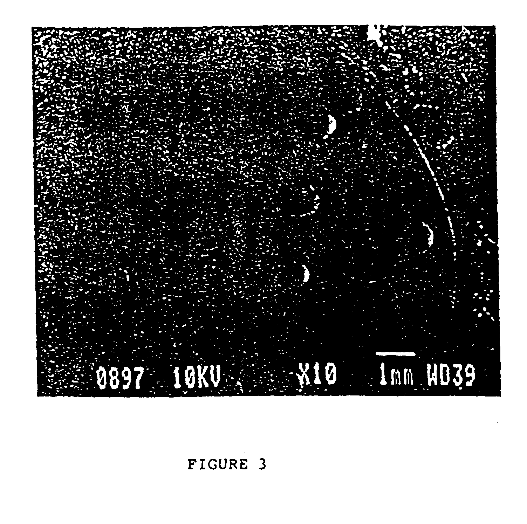

Referring now to the Figures, Figure 1 shows a scanning electron micrograph (SEM) at X10 magnification of a polyethylene sample produced by homogeneous polymerization using [Cp*Cr(THF)₂CH₃]⁺[BPh₄]⁻ (where Cp* represents pentamethylcyclopentadienyl, THF is tetrahydrofuran, and Ph is phenyl). As can be seen, this sample is characterized by very small, irregularly shaped particles. These particles are typically less than 20-50 µm (microns) in diameter. Figure 2 shows an SEM at X10 magnification of a polyethylene sample produced by the method of the present invention using Cp∗Cr(CH₃)₂(THF) on a silica support. As can be seen, this sample has particles of much larger size (about 1 mm in diameter) than those in Figure 1. The particle size is quite suitable for gas phase polymerization applications. Figure 3 shows a SEM of a polyethylene sample produced by the method of this invention using Cp∗Cr(CH₃)₂(THF) on a Al₂O₃·2AlPO₄ support. As can be seen, the particles are quite uniform in size, and primarily spherical in nature. Again, the particle size and spherical nature of the polymer makes this system attractive for gas phase polymerization applications.

Activities for the catalyst systems of the present invention are greater than 3,000 grams of polymer per gram of chromium metal per hour ("g/g Cr/hr"), preferably greater than 30,000 g/g Cr/hr, and more preferably greater than 200,000 g/g Cr/hr.

The term molecular weight distribution ("MWD"), as used herein, is the weight average molecular weight ("M_{w}") divided by the number average molecular weight ("Mₙ"), i.e., M_{w/}M_{n.} The polymers produced in accordance with the present invention using silica supported catalysts have a MWD greater than 10, preferably greater than 15, and more preferably greater than 20. These polymers, which have high MWD's, have improved ease of processing, better melt behavior, and other desirable properties such as impact resistance and environmental stress crack resistance. Large blow molded products are superior when made with high MWD polymers. Additionally, film is more puncture resistant when made from polymer with a high MWD. The polymers made in accordance with this invention using alumina aluminum phosphate supported catalysts possess high molecular weight and a more narrow MWD, making them useful in such applications as injection molding.

The catalyst systems of the present inyention comprise at least one cyclopentadienyl chromium hydrocarbyl compound in which the Group 6b metal is in an oxidation state of +3, and which is catalytically active when deposited on an inorganic metal oxide or inorganic metal phosphate support. As used herein, the term "cyclopentadienyl" refers to unsubstituted cyclopentadienyl as well as substituted derivatives of cyclopentadienyl in which the cyclopentadienyl ring contains one or more substituents which do not interfere with the Group 6b metal compound's ability to function as an alpha-olefin polymerization catalyst. Examples of substituted cyclopentadienyl include pentamethylcyclopentadienyl, methylcyclopentadienyl, t-butylcyclopentadienyl, and pentaphenylcyclopentadienyl, as well as compounds where the substituent forms a multi-cyclic ring with the cyclopentadienyl ring. Examples of these multi-cyclic rings include indenyl and fluorenyl rings. For the sake of simplicity, the abbreviation "Cp" will be used herein to refer to unsubstituted cyclopentadienyl, and the abbreviation "Cp*" will be used to refer to pentamethylcyclopentadienyl. Cp* is a preferred cyclopentadienyl group as it stabilizes the organometallic compound of this invention.

These chromium compounds have, in addition to one cyclopentadienyl group, at least one hydrocarbyl group bonded to the metal atom. As used herein, the term "hydrocarbyl" refers to alkyl, alkenyl, aryl, aralkyl and alkaryl radicals and the like. Exemplary hydrocarbyl radicals include, but are not limited to, methyl, ethyl, propyl, butyl, amyl, isoamyl, hexyl, neopentyl, isobutyl, heptyl, octyl, nonyl, decyl, cetyl, phenyl, benzyl and other similar groups. Additionally, organosilyl groups, such as trimethylsilyl methyl, i.e., (CH₃)₃SiCH₂-, and the like can be used. If more than one hydrocarbyl group is bonded to the chromium atom, they can be independent or linked, i.e., they can form a 3-, 4-, 5-, 6-, or 7-membered metallocycle. Preferably, the hydrocarbyl group is sigma bonded to the chromium.

In addition to the cyclopentadienyl and hydrocarbyl groups, the chromium compounds of the present invention may also contain one or more sigma donor stabilizing ligands. These ligands contain an atom, such as oxygen, nitrogen, phosphorous or sulfur, which has a nonbonded electron pair. Examples of these ligands include, but are not limited to, ethers, amines, phosphines and thioethers. Ethers such as tetrahydrofuran (THF) and amines such as pyridine are preferred. Compounds with pyridine are most preferred and give catalysts with high activity and stability.

Examples of the chromium compounds useful in this invention include, but are not limited to, compounds having the following general formulas:

(C₅(R')₅)ₐMX_{b}L (I)

[(C₅(R')₅)ₐMX_{b}]_{c} (II)

or

[(C₅(R')₅)ₐMX_{b}(L)ₘ]⁺[A]⁻ (III)

wherein
M is chromium;
(C₅(R')₅) is a cyclopentadienyl or substituted cyclopentadienyl ring;
R' is at each independent occurrence hydrogen, a hydrocarbyl radical having 1-20 carbon atoms, or adjacent R' groups may together form one or more rings;
X is a hydrocarbyl radical having 1-20 carbon atoms (for example, a monovalent saturated aliphatic or alicyclic radical or a monovalent aromatic radical, or combinations thereof);
a = 1 or 2, b = 1 or 2 where a+b = 3;
c = 1 or 2 with the proviso that when c = 2 then X is alkyl;
L is at each independent occurrence a sigma donor stabilizing ligand;
m = 1 to 2 inclusive; and
A is an anion.

Examples of compounds having Formula (I) above include, but are not limited to, Cp*Cr(CH₃)₂(THF), Cp*Cr(Bzyl)₂(THF), Cp*Cr (Bzyl)₂(Pyr), Cp*Cr(CH₃)₂(Pyr), Cp*Cr(TMSM)₂(Pyr) and Cp*Cr(TMSM)₂ where Bzyl is benzyl, Pyr is pyridine and TMSM is trimethylsilylmethyl.

Further examples of the chromium compounds of this invention include monomeric Group 6b metal compounds, dimeric chromium compounds, and cationic chromium compounds. A preferred monomeric chromium compound is Cp*Cr(Bzyl)₂(THF), [Cp*Cr(CH₃)₂]₂ is a preferred dimeric compound, and a preferred cationic compound is [Cp*CrCH₃(THF)₂]⁺[BPh₄]⁻. An especially preferred compound is Cp*Cr(CH₃)₂(Pyr).

In part, the choice of chromium compound is based on the thermal stability of the compound and its ease of preparation. Of the chromium compounds useful in this invention, the organochromium compounds are preferred.

Theopold, J. Am. Chem. Soc. (1988), 110, 5902 entitled "Cationic Chromium (III) Alkyls as Olefin Polymerization Catalysts", Theopold, Acc. Chem. Res. (1990), 23, 263 entitled "Organochromium (III) Chemistry: A Neglected Oxidation State", and Thomas et al., J. Amer. Chem. Soc., 113 (1991), p. 893 et seq. describe syntheses useful in making some of the Group 6b metal compounds of this invention. Similar procedures can be used to make related compounds.

In the catalyst systems of the present invention, the chromium compound is deposited on an inorganic support. Suitable inorganic metal oxide supports include silica, alumina, silica-alumina mixtures, thoria, zirconia, magnesium oxide and similar oxides. Suitable inorganic metal phosphates include aluminum phosphate, zirconium phosphate, magnesium-containing alumina phosphate and alumina aluminum phosphate. Silicas, aluminum phosphates and alumina aluminum phosphates are preferred. Suitable silica supports include Davison 952, Davison 955, Crosfield EP-10 and Crosfield EP17MS. Further examples of useful supports are the following: alumina aluminum phosphates with aluminum to phosphorus ratios of about 5:1 to 1:1 as disclosed in U.S. Patents Nos. 4,080,311 and 4,219,444; magnesia-alumina-aluminum phosphates as described in U.S. Patent No. 4,210,560; zinc oxide-cadmium oxide-alumina-aluminum phosphates such as those disclosed in U.S. Patent No. 4,367,067; and the calcium, barium, and/or strontium oxide-alumina-aluminum phosphates described in U.S. Patent Nos. 4,382,877 and 4,382,878. The acidity of these supports can be adjusted by judicious inclusion of basic metals such as alkali and alkaline earth metals (Ca, Be, Mg, K, Li) to counteract excessive acidity. Other useful supports include magnesium halides, particularly magnesium chloride, such as those described in "Transition Metals and Organometallics as Catalysts for Olefin Polymerization" (1988, Springer-Verlag) edited by W. Kaminsky and H. Sinn and "Transition Metal Catalyzed Polymerizations-Ziegler-Natta and Metathesis Polymerizations" (1988, Cambridge University Press) edited by R. Quirk.

The supports useful in this invention should have a high surface area. In general, these supports should have the characteristics listed in the following table:

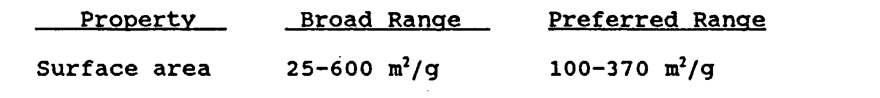

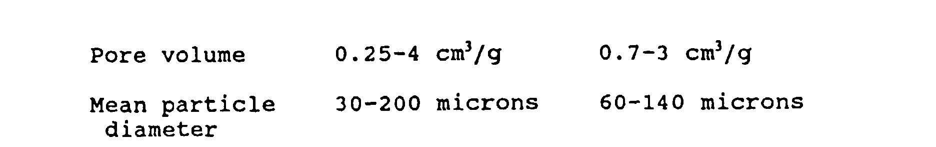

Preferably, the pore size distribution is broad, with a significant percentage of the pores in the macropore range (>500 Angstroms). Preferably, at least 50% of the pores are macropores. It is also desirable that the support be substantially anhydrous before the chromium compound is deposited on it. Thus, it is desirable to calcine the support prior to deposition of the chromium compound.

The supported catalysts of this invention are readily prepared by techniques well known in the art. For example, a solution of the chromium compound in aliphatic, aromatic or cycloaliphatic hydrocarbons, or ethers such as diethyl ether or tetrahydrofuran can be stirred with the support until the chromium compound is adsorbed on or reacted with the support. The amount of chromium compound relative to the amount of support will vary considerably depending upon such factors as the particle size of the support, its pore size and surface area, the solubility of the chromium compound in the solvent employed, and the amount of chromium compound which is to be deposited on the support. However, in general the amount of chromium compound used is adjusted so that the final metal content (calculated as the element), relative to the support, is in the range of from about 0.01 to about 10 weight percent. In most cases, the most desirable level is in the range of about 0.1 to about 5 weight percent.

The aluminoxane co-catalyst may be one represented by the general formula (R-Al-O)ₙ for the cyclic form and R(R-Al-O)ₙ-AlR₂ for the linear form. In these formulas, R is, at each independent occurrence, an alkyl group (such as methyl, butyl, isobutyl) preferably with more than two carbon atoms, more preferably with 3-5 carbon atoms, and n is an integer, preferably from 1 to 20. Most preferably, R is an isobutyl group. Mixtures of linear and cyclic aluminoxanes may also be used. Examples of aluminoxanes useful in this invention include, but are not limited to, ethyl aluminoxane, isobutyl aluminoxane, and methyl aluminoxane. Aluminoxanes (also known as "alumoxanes") suitable for use in this invention are described in Pasynkiewicz, "Alumoxanes: Synthesis, Structure, Complexes and Reactions," Polyhedron 9, p. 429 (1990).

The aluminoxane co-catalyst is preferably used in an aluminoxane to chromium compound mole ratio of from about 1:1 to about 1000:1. The preferred mole ratio is from about 10:1 to about 200:1.

The catalyst systems of the present invention may be used in either slurry or gas phase polymerization processes. After the catalysts have been formed, the polymerization reaction is conducted by contacting the monomer charge with a catalytic amount of the catalyst at a temperature and at a pressure sufficient to initiate the polymerization reaction. If desired, an organic solvent may be used as a diluent and to facilitate materials handling. The polymerization reaction is carried out at temperatures of from 30°C or less up to 200°C or more, depending to a great extent on the operating pressure, the pressure of the entire monomer charge, the particular catalyst being used, and its concentration. Preferably, the temperature is from about 30°C to about 125°C. The pressure can be any pressure sufficient to initiate the polymerization of the monomer charge, and can be from atmospheric up to about 1000 psig. As a general rule, a pressure of about 20 to about 800 psig is preferred.

When the catalyst is used in a slurry-type process, an inert solvent medium is used. The solvent should be one which is inert to all other components and products of the reaction system, and be stable at the reaction conditions being used. It is not necessary, however, that the inert organic solvent medium also serve as a solvent for the polymer produced. The inert organic solvents which may be used include saturated aliphatic hydrocarbons (such as hexane, heptane, pentane, isopentane, isooctane, purified kerosene and the like), saturated cycloaliphatic hydrocarbons (such as cyclohexane, cyclopentane, dimethylcyclopentane, methylcyclopentane and the like), aromatic hydrocarbons (such as benzene, toluene, xylene and the like), and chlorinated hydrocarbons (such as chlorobenzene, tetrachloroethylene, o-dichlorobenzene and the like). Particularly preferred solvents are cyclohexane, pentane, isopentane, hexane and heptane.

When the catalyst is used in a gas phase process, it is suspended in a fluidized bed with, e.g., ethylene. Temperature, pressure and ethylene flow rates are adjusted so that to maintain acceptable fluidization of the catalyst particles and resultant polymer particles. Further descriptions of such a fluidized bed may be found in British Patent No. 1,253,063, to Karapinka.

The following examples are intended to further illustrate the present invention.

### EXAMPLES

### EXAMPLE 1

### SUPPORTS

Silica supports were purchased from W. R. Grace & Co., and included Davison 952 and Davison 955 silicas. These silicas have the following properties:

| Property | Davison 952 | Davison 955 |
|---|---|---|
| Surface area | 340 m²/g | 300 m²/g |
| Pore volume | 1.68 cm³/g | 1.60 cm³/g |
| Mean particle diameter | 110 microns | 40 microns |

The alumina aluminum phosphate supports used in the following examples were prepared by the procedure of Example 1 in U.S. Patent No. 4,080,311, issued March 21, 1978 to Kehl. The product had an Al₂O₃ to AlPO₄ ratio of 1:2.

### CATALYST PREPARATIONS

In the preparation of the following catalysts, all manipulations were performed under argon using glove box or Schlenk techniques. All solvents were thoroughly dried over Na/benzophenone or calcium hydride and distilled prior to use.

### EXAMPLE 2

### [Cp∗Cr(CH₃)₂]₂

The organochromium compound [CP∗Cr(CH₃)₂]₂ was prepared by the procedure described in Theopold, Acc. Chem. Res., 23 (1990), p. 264.

### EXAMPLE 3

### SUPPORTED [Cp∗Cr(CH₃)₂]₂

The organochromium compound [Cp∗Cr(CH₃)₂]₂ (0.040 g, 9.2 x 10⁻⁵ mole), prepared as described in Example 2, was dissolved in 10 ml of pentane, giving a dark brown solution to which was added Davison 952 silica (1.00 g). The resulting mixture was stirred for 15 minutes, giving a dark brown solid and a clear supernatant. The resulting solid catalyst was washed with pentane, and dried to a free-flowing powder.

### EXAMPLE 4

### SUPPORTED Cp∗Cr(CH₃)₂(THF)

[Cp∗Cr(CH₃)₂]₂ (0.040 g, 9.2 x 10-5 mole) was added to 20 ml of tetrahydrofuran ("THF") and stirred for 0.5 hour, generating a green colored solution containing Cp∗Cr(CH₃)₂(THF). Al₂O₃·2AlPO₄ (1.0 g) solid support was added all at once to this solution, and the resulting mixture was stirred for several minutes. All of the organochromium compound reacted with the solid support yielding a deep purple catalyst and a clear supernatant. The resulting catalyst slurry was filtered and the purple solid was washed twice with 10 ml of THF and dried under vacuum to a free flowing powder.

### EXAMPLE 5

### [Cp*CrCH₃(THF)₂]⁺[BPh₄]⁻

This compound was prepared by the method described in Thomas et al., J. Amer. Chem. Soc., 113 (1990), p. 900. Preparation No. 13, method B was used to prepare compound number 14 in that paper, i.e., [Cp*CrCH₃(THF)₂]⁺[BPh₄]⁻.

### EXAMPLE 6

### SUPPORTED [Cp*CrCH₃(THF)₂]⁺[BPh₄]⁻

[Cp*CrCH₃(THF)₂]⁺[BPh₄]⁻ (0.075 g, 1.1 x 10⁻⁴ mole) was dissolved in 20 ml of THF and treated all at once with 1.00 g of Al2O₃·2AlPO₄. The resulting mixture was stirred for 15 minutes resulting in a dark blue solid and a clear supernatant. The solid was washed with THF, and dried to a free-flowing powder.

### COMPARATIVE EXAMPLE A

### ETHYLENE POLYMERIZATION USING AN UNSUPPORTED CATALYST

90.1 micromoles of [Cp*CrCH₃(THF)₂]⁺[BPh₄]⁻ was dissolved in 25 ml methylene chloride in a 50 ml Fischer-Porter bottle, and pressured to 441 kPa (50 psig) with ethylene. The reactor was stirred at 25°C for 1.0 hour. Initially, the ethylene uptake was rapid, but this rate decreased rapidly over the first half hour. The reaction was stopped by venting the pressure. The polymer produced was washed with isopropanol and then with acetone. The polymer was then dried under vacuum. The results of this polymerization are indicated in Run 1 in Tables I and II.

### COMPARATIVE EXAMPLE B

### ETHYLENE POLYMERIZATION USING AN UNSUPPORTED CATALYST AND A CO-CATALYST

The procedure of Comparative Example A was repeated, except that 71 molar equivalents of isobutyl aluminoxane (IBAO) was added to the reaction vessel prior to pressurization with ethylene. The results of this polymerization are indicated in Run 2 in Tables I and II.

### EXAMPLE 7

### ETHYLENE POLYMERIZATION

Polymerization runs were conducted in 1 or 2 liter autoclave reactors under particle form (slurry) conditions using between 300 and 500 ml heptane as diluent, and a weighed amount of catalyst (typically 0.050 to 0.250 g). Run times of 0.5 to 1.0 hour were normally employed. For example, in a typical run, 0.100 g of the catalyst prepared in Example 4 (Cp*Cr(CH₃)₂(THF) adsorbed on Al₂O₃.2AlPO₄) was charged to a one-liter autoclave along with 300 ml of heptane. Polyisobutylaluminoxane (0.5 ml of a 1.0M heptane solution, prepared by slow hydrolysis of triisobutylaluminum with 1.0 equivalents of H₂O as in Example 3 of U.S. Patent No. 4,665,208, issued May 12, 1987 to Welborn et al., which patent is incorporated by reference herein) was added to the stirred reactor as co-catalyst. The reactor temperature and pressure were adjusted to 85° C. and 3.89 MPa (550 psi)(with ethylene), respectively. The ethylene was supplied on demand from a pressurized reservoir. After 0.5 hour, the reaction was stopped by rapidly cooling the reactor and venting the pressure. The polymer produced was washed with isopropanol and acetone, and dried under vacuum to yield 82.9 g of white, granular solid. The results of this polymerization are indicated in Run 15 in Tables III and IV.

Polymerization runs similar to that described above were conducted using the catalysts and conditions shown in Tables I, III, and V below. Analytical data for the polyethylenes produced in these runs is shown in Tables II, IV and VI below. All molecular weights in these tables were determined by gel permeation chromatography.

### EXAMPLE 8

### GAS PHASE POLYMERIZATION

The procedure of Example 7 is repeated in a 2 liter, stirred autoclave using the supported Cr⁺³ catalysts described above, except that heptane is not added to the autoclave. The reactor temperature and pressure are adjusted to 85°C and 3.89 MPa (550 psi) (with ethylene), respectively. A white, granular polymer is produced.

**TABLE I**

| **POLYMERIZATION DATA FOR [Cp*CrMe(THF)**_{**2**}**] [BPh**_{**4**}**]** | | | | | | | |
|---|---|---|---|---|---|---|---|
| **Run** | **Support**^{**a**} | **µmol Cr** | **Co-catalyst** | **Al:Cr**^{**b**} | **C**_{**2**}**H**_{**4**}**, kPa (psig)** | **Temp. °C** | **Activity**^{**c**} |
| 1 comparative | none^{d} | 90.1 | -- | 0 | 441(50) | 25 | 510 |
| 2 | none^{d} | 90.1 | IBAO^{e} | 71:1 | 441(50) | 25 | 89 |
| 3 | Davison 952 Silica | 28.2 | IBAO | 71:1 | 441(50) | 25 | 6,690^{f} |
| 4 comparative | Davison 952 Silica | 21.6 | -- | 0 | 3890 (550) | 80 | 0 |
| 5 | Davison 952 Silica | 27.0 | IBAO | 110:1 | 3890 (550) | 80 | 48,400 |
| 6 | Davison 952 Silica | 27.0 | IBAO | 71:1 | 3890 (550) | 85 | 50,600 |
| 7 comparative | Davison 952 Silica | 27.0 | Al(CH₃)₃ | 71:1 | 3890 (550) | 85 | 3,700 |
| 8 | Al₂O₃·2AlPO₄ | 15.0 | IBAO | 33:1 | 3890 (550) | 85 | 233,000 |

| | | | | | | | |
|---|---|---|---|---|---|---|---|
| ^{a}Precalcined at 400°C for 48 hours. | | | | | | | |
| ^{b}Mole ratio. | | | | | | | |
| ^{c}g polymer/g Cr/hr. | | | | | | | |
| ^{d}Performed under homogeneous conditions in CH₂Cl₂, catalyst rapidly deactivated. | | | | | | | |
| ^{e}IBAO = isobutylaluminoxane. | | | | | | | |
| ^{f} Polymerization performed for two hours. | | | | | | | |

**TABLE II**

| **ANALYTICAL DATA FOR POLYETHYLENES PREPARED WITH [Cp*CrMe(THF)**_{**2**}**] [BPh**_{**4**}**]** | | | | | | |
|---|---|---|---|---|---|---|
| **Run** | **Support** ^{**g**} | **T**_{**m**}**, °C** | **Density g/cc** | **Mean Particle Diameter, Microns** | **Mw**^{**h**}**x 10**^{**-3**} | **MWD** |
| 1 comparative | --ⁱ | 135.5 | -- | -- | 125 | 5.8 |
| 5 | Davison 952 Silica | 138.8 | -- | 830 | 252 | 12.8 |
| 6 | Davison 952 Silica | 137.9 | 0.942 | 850 | 258 | 22.6 |
| 7 comparative | Davison 952 Silica | 136.3 | -- | -- | 236 | 34.2 |
| 8 | Al₂O₃·2AlPO₄ | 138.0 | 0.927 | -- | j | -- |

| | | | | | | |
|---|---|---|---|---|---|---|
| ^{g}Precalcined at 400°C for 48 hours. | | | | | | |
| ^{h}Determined by GPC. | | | | | | |
| ⁱPerformed under homogeneous conditions in CH₂Cl₂. | | | | | | |
| ^{j}Too high to be measured by GPC, i.e., ≥300,000. | | | | | | |

.

**TABLE III**

| **POLYMERIZATION DATA FOR SUPPORTED Cp*CrMe**_{**2**}**(THF)** | | | | | | | |
|---|---|---|---|---|---|---|---|
| **Run** | **Support** ^{**k**} | **µmol Cr** | **Co-catalyst** | **Al:Cr**^{**l**} | **C**_{**2**}**H**_{**4**}**, kPa psig** | **Temp. °C** | **Activity**^{**m**} |
| 9 comparative | Davison 952 Silica | 46.0 | -- | 0 | 3890 (550) | 80 | 0 |
| 10 | Davison 952 Silica | 46.0 | EAOⁿ | 44:1 | 3890 (550) | 80 | 15,200 |
| 11 | Davison 952 Silica | 46.0 | IBAO^{o} | 44:1 | 3890 (550) | 85 | 33,000 |
| 12 | Davison 955 Silica | 46.0 | IBAO | 44:1 | 3890 (550) | 85 | 51,000 |
| 13 | Davison 955 Silica | 18.4 | IBAO | 54:1 | 3890 (550) | 85 | 55,900 |
| 14 comparative | Al₂O₃·AlPO₄ | 46.0 | -- | 0 | 3890 (550) | 85 | 5,400 |
| 15 | Al₂O₃·2AlPO₄ | 18.4 | IBAO | 27:1 | 3890 (550) | 85 | 173,000 |
| 16 | Al₂O₃·2AlPO₄ | 18.4 | IBAO | 54:1 | 3890 (550) | 65 | 272,000 |
| 17 | Al₂O₃·2AlPO₄ | 18.4 | IBAO | 27:1 | 3890 (550) | 65 | 169,000 |
| 18 | Al₂O₃·2AlPO₄ | 18.4 | IBAO | 27:1 | 3890 (550) | 85 | 240,000 |

| | | | | | | | |
|---|---|---|---|---|---|---|---|
| ^{k}Precalcined at 400°C for 48 hours. | | | | | | | |
| ^{l}Mole ratio. | | | | | | | |
| ^{m}g polymer/g Cr/hr. | | | | | | | |
| ⁿEAO = ethylaluminoxane. | | | | | | | |
| ^{o}IBAO = isobutylaluminoxane. | | | | | | | |

**TABLE IV**

| **ANALYTICAL DATA FOR POLYETHYLENES PREPARED WITH SUPPORTED Cp*CrMe**_{**2**} **(THF)** | | | | | |
|---|---|---|---|---|---|
| **Run** | **Support**^{**p**} | **T**_{**m**}**,°C** | **Density g/cc** | **Mw**^{**q**} **x 10**^{**-3**} | **MWD** |
| 10 | Davison 952 Silica | 138.4 | 0.941 | 306 | 18.2 |
| 11 | Davison 952 Silica | 139.6 | -- | 293 | 19.2 |
| 12 | Davison 955 Silica | 138.3 | -- | 301 | 20.4 |
| 13 | Davison 955 Silica | 138.3 | 0.941 | 270 | 14.4 |
| 14 comparative | Al₂O₃·2AlPO₄ | 135.1 | | r | -- |
| 15 | Al₂O₃·2AlPO₄ | 134.7 | -- | r | -- |
| 16 | Al₂O₃·2AlPO₄ | 136.6 | 0.927 | r | -- |
| 17 | Al₂O₃·2AlPO₄ | 139.0 | 0.924 | r | -- |
| 18 | Al₂O₃·2AlPO₄ | 138.1 | 0.926 | r | -- |
| ^{p}Calcined at 400°C for 48 hours. ^{q}Determined by GPC. ^{r}Too high to be measured by GPC, i.e., ≥300,000. | | | | | |

Looking, now, at Tables I and II, it can be seen that the polymerization using the homogeneous cationic Cr⁺³ compound has low activity (Run 1), and that adding triisobutylaluminoxane does not improve the activity, but rather reduces it (Run 2). These runs were performed at 25°C so as to avoid decomposition of the thermally labile homogeneous catalyst.

In contrast, Run 3 shows an approximately ten-fold improvement in activity using a supported catalyst system of this invention.

Runs 4-8 show the need for a co-catalyst when using this cationic Cr⁺³ compound. The aluminoxane co-catalyst gives improved activity over the trimethylaluminum co-catalyst. Additionally, higher molecular weights (M_{w}) and higher molecular weight distributions (MWD = M_{w}/Mₙ) are obtained with the catalyst system of the present invention (see Table III). The activity of this catalyst system was highest when the support was an alumina aluminum phosphate support, and the polymer had higher molecular weight as well.

Looking, now, at Tables III and IV, using the aluminoxane with the longer alkyl groups (isobutyl vs. ethyl) gives higher activities. Also, the Davison 955 silica, which has a substantially smaller average particle size than the Davison 952 silica, gives higher activity (compare Runs 10 and 11 with Runs 12 and 13).

Table III also shows that the catalyst systems of this invention perform exceptionally well over the temperature range of 65°-85°C.

### EXAMPLE 9

### Cp^{∗}Cr (TMSM)₂

1.318 g of CrCl₃(THF)₃ was placed in a 100 ml Schlenk flask along with a stirring bar and about 50-60 ml of THF. 0.500 g of Cp*Li was added to the resulting slurry producing a blue solution ([Cp*CrCl₂]₂). This solution was allowed to stir for at least three hours (preferably overnight). To the stirring solution was slowly added 2 equivalents of LiCH₂Si(CH₃)₃. The solution changed from blue to purple.

The THF was then removed by rotoevaporation and the resulting solid was dissolved in pentane yielding a red brown solution which was filtered to remove LiCl. The pentane was removed by rotoevaporation and the solid was redissolved in a minimum amount of pentane and crystallized at -30°C. Yield 50-60%.

It is important to note that this compound is thermally unstable and decomposes at room temperature liberating tetramethylsilane.

### EXAMPLE 10

### SUPPORTED Cp*Cr(TMSM)₂

Cp*Cr(TMSM)₂ (0.075 g) was dissolved in 10 ml of pentane. Al₂O₃·2AlPO₄ (1.00 g) was added all at once to the stirred solution resulting in the formation of a purple solid and clear supernatant after 15 minutes. The solid was collected, washed twice with pentane, and dried in vacuo to a free-flowing powder.

### EXAMPLE 11

The supported Cp*Cr(TMSM)₂ prepared in Example 10 was used to polymerize ethylene by a procedure similar to that described in Example 7 except that the polymerization was performed at 80°C and 3.89 MPa (550 psi) total pressure (ethylene and hydrogen). The results of these polymerization runs are indicated in Table VII below, and analytical data for the polyethylenes produced are indicated in Table VIII below.

**TABLE VI**

| **POLYMERIZATION DATA FOR SUPPORTED Cp*Cr(TMSM)**_{**2**} | | | | | |
|---|---|---|---|---|---|
| **Run**^{**1**} | **µ mol Cr** | **Co-catalyst** | **Al:Cr**^{**2**} | **H**_{**2**} **(psi)** | **Activity**^{**3**} |
| 19 comparative | 31 | None | 0 | 0 | 2,500 |
| 20 | 16 | IBAO⁴ | 16:1 | 0 | 250,000 |
| 21 | 16 | IBAO | 32:1 | 0 | 341,000 |
| 22 | 16 | IBAO | 32:1 | 10 | 294,000 |
| 23 | 16 | IBAO | 32:1 | 25 | 340,000 |
| 24 | 16 | IBAO | 32:1 | 25 | 230,000 |
| 25 | 16 | IBAO | 32:1 | 50 | 227,000 |
| 26 | 16 | IBAO | 32:1 | 50 | 249,000 |
| 27 | 16 | IBAO | 32:1 | 100 | 194,000 |
| 28 | 16 | IBAO | 32:1 | 200 | 124,000 |
| 29 comparative | 16 | TEB⁵ | 32:1⁶ | 0 | ∼0 |

| | | | | | |
|---|---|---|---|---|---|
| ¹Support dehydrated at 400°C for 48 hours for all runs. | | | | | |
| ²Mole ratio. | | | | | |
| ³Expressed as g polymer/g Cr/hr. | | | | | |
| ⁴IBAO is isobutylaluminoxane. | | | | | |
| ⁵TEB is triethylboron. | | | | | |
| ⁶B:Cr mole ratio. | | | | | |

**TABLE VII**

| **ANALYTICAL DATA FOR POLYETHYLENES PREPARED WITH SUPPORTED Cp*Cr(TMSM)**_{**2**} | | | | | |
|---|---|---|---|---|---|
| **Run** | **T**_{**m**}**, °C** | **MI**^{**7**} | **HLMI**^{**8**} | **Mw**^{**9**} **x 10**^{**-3**} | **MWD** |
| 20 | 139.1 | 0 | 0 | 1,124 | 2.02 |
| 21 | 139.4 | 0 | 0 | 891 | 7.61 |
| 22 | 139.9 | 0 | 0 | -- | -- |
| 23 | 139.9 | 0 | 2.27 | 330 | 9.29 |
| 24 | 141.9 | 0 | 2.03 | 276 | 8.52 |
| 25 | 139.7 | 0 | 6.50 | 228 | 9.62 |
| 26 | 138.8 | 0 | 11.9 | 205.6 | 9.40 |
| 27 | 138.0 | 0 | 12.7 | 116.3 | 8.37 |
| 28 comparative | 135.0 | High | High | 55.8 | 7.10 |

| | | | | | |
|---|---|---|---|---|---|
| ⁷Melt Index (ASTM D-1238, Condition E) | | | | | |
| ⁸High load melt index (ASTM D-1238, Condition F) | | | | | |
| ⁹Determined by GPC. | | | | | |

### EXAMPLE 12

### Cp*Cr(Bzyl)₂(THF)

To a slurry of CrCl₃(THF)₃ (2.00 g, 5.33 mmoles) in 50 ml of THF was added LiCp* (0.76 g, 5.34 mmoles) slowly with stirring to yield a deep blue solution. This solution was stirred for two hours. Slow addition of benzyl magnesium chloride (5.3 ml of 2.0 M solution) resulted in a deep purple solution after complete addition. Solvent was subsequently removed under vacuum to yield a sticky purple residue. Pentane (200 ml) was added and stirred overnight. The pentane solution slowly became green-brown during this time. The pentane solution was filtered to remove metal halides, concentrated to ca. 75 ml and stored at -40°C overnight. The crystalline material that formed was collected, washed with cold pentane, and dried under vacuum, affording 680 mg (29%) of dark brown material.

### COMPARATIVE EXAMPLE 13

### HOMOGENEOUS POLYMERIZATION WITH Cp*Cr(Bzyl)₂(THF)

Seventy-five milligrams of Cp*Cr(CH₂Ph)₂(THF) was dissolved in 50 ml of heptane and placed in a thick-walled glass vessel which was attached to a purified ethylene supply. Ethylene was added to 441 kPa (50 psi) at ca. 20°C. A mild exotherm ensued with the generation of 0.70 g of beige polymer after one hour. The catalyst was essentially inactive after one hour as evidenced by the lack of ethylene uptake.

### EXAMPLE 14

Cp*Cr(Bzyl)₂(THF) was supported on Al₂O₃·2AlPO₄ (which had been dehydrated at 400°C for 48 hours) and used to polymerize ethylene using the procedure described in Example 11. The results of these polymerization runs are indicated in Table IX below.

**TABLE VIII**

| **POLYMERIZATION DATA FOR Cp*Cr(Bzyl)**_{**2**}**(THF)** | | | | | |
|---|---|---|---|---|---|
| **Run** | **µ mol Cr** | **Co-catalyst** | **Al:Cr**^{**10**} | **H**_{**2**} **(psi)** | **Activity**^{**11**} |
| 30 | 12 | IBAO | 25:1 | 0 | 444,000 |
| 31¹² | 12 | IBAO | 25:1 | 0 | 235,000 |
| 32¹² | 12 | IBAO | 25:1 | 0 | 230,000 |

| | | | | | |
|---|---|---|---|---|---|
| ¹⁰Mole ratio. | | | | | |
| ¹¹Expressed as g polymer/g Cr/hr. | | | | | |
| ¹²Polymerization performed with argon/ethylene mixture (250 psi/300 psi). | | | | | |

### EXAMPLE 15

### Cp*Cr(CH₃)₂(Pyr)

This compound was prepared as described in Noh, S.K.; Sendlinger, S. C.; Janiak, C.; Theopold, K. H. J. Am. Chem Soc. (1989), 111, 9127.

### EXAMPLE 16

### Cp*Cr(Bzyl)₂(Pyr)

This compound was prepared as in Example 15 except that two equivalents of benzylmagnesium bromide were substituted for methyllithium. A microcrystalline solid formed and was dried under vacuum. Anal. Calc. for C₂₉H₃₄NCr: C,77.65; H,7.64; N,3.12. Found: C,77.03; H,7.48; N,2.80.

### EXAMPLE 17

### Cp*Cr(TMSM)₂(Pyr)

This compound was prepared as in Example 15 except that two equivalents of trimethylsilylmethyllithium solution were added in place of methyllithium. Long, black needles formed after cooling to -40 °C overnight. These were collected and dried to yield 1.30 g (55%) of pure material. Anal. Calc. for C₂₃H₄₂NSi₂Cr: C, 62.67; H, 9.60; N, 3.17. Found: C, 62.36; H, 9.46; N, 2.84.

### EXAMPLE 18

### SUPPORTED COMPLEXES

Cp*Cr(CH₃)₂(Pyr), Cp*Cr (Bzyl)₂(Pyr), and Cp*Cr(TMSM)₂(Pyr) were individually supported on dehydrated (400 °C) supports as in Example 10 to give catalysts with ca 1.0 wt % chromium. The supports used are listed in the following tables.

### EXAMPLE 19

The supported catalysts of Example 18 were each in turn used to polymerize ethylene by a procedure similar to that described in Example 11. The results of these polymerization runs are indicated in the following tables.

**TABLE X**

| **Run #** | **Support**^{**a**} | **Cr Compound** | **µmol Cr** | **Co-cat** | **Al:Cr**^{**b**} | **Activity**^{**c**} |
|---|---|---|---|---|---|---|
| 33 | Al₂O₃·2AlPO₄ | Cp*Cr(CH₃)₂(Pyr)^{d} | 15.7 | IBAO^{e} | 19 | 623,000 |
| 34 | Al₂O₃·2AlPO₄ | Cp*Cr(CH₃)₂(Pyr)^{d} | 15.7 | IBAO | 19 | 237,000^{f} |
| 35 | Al₂O₃·2AlPO₄ | Cp*Cr(CH₃)₂(Pyr)^{d} | 8.4 | IBAO | 24 | 764,000 |
| 36 | AlPO₄ | Cp*Cr(CH₃)₂(Pyr)^{d} | 8.4 | IBAO | 24 | 1,488,000 |
| 37 | AlPO₄ | Cp*Cr(CH₃)₂(Pyr)^{d} | 8.4 | IBAO | 24 | 1,600,000 |
| 38 | EP-10^{g} | Cp*Cr(CH₃)₂(Pyr)^{d} | 16.7 | IBAO | 18 | 410,000 |
| 39 | EP-10 | Cp*Cr(CH₃)₂(Pyr)^{d} | 15.7 | IBAO | 19 | 356,000 |
| 40 | Al₂O₃·2AlPO₄ | Cp*Cr(Bzyl)₂(Pyr)^{h} | 12.8 | IBAO | 24 | 750,000 |
| 41 | Al₂O₃·2AlPO₄ | Cp*Cr(TMSM)₂(Pyr)ⁱ | 12.8 | IBAO | 24 | 722,000 |

| | | | | | | |
|---|---|---|---|---|---|---|
| ^{a} Support dehydrated at 400°C for 24 hrs. for all runs. | | | | | | |
| ^{b} Mole ratio | | | | | | |
| ^{c} Expressed as g polymer/g Cr/hr. | | | | | | |
| ^{d} Pyr = pyridine | | | | | | |
| ^{c} IBAO = isobutyl aluminoxane | | | | | | |
| ^{f} Polymerization performed with 2.16 MPa/1.82 MPa (300 psi/250 psi) ethylene/argon ratio | | | | | | |
| ^{g} Crosfield silica support (similar to Davison 952) | | | | | | |
| ^{h} Bzyl = benzyl | | | | | | |
| ⁱ TMSM = trimethylsilylmethyl | | | | | | |

**TABLE XI**

| **ANALYTICAL DATA FOR POLYETHYLENES PREPARED WITH SUPPORTED CATALYSTS OF TABLE X** | | | |
|---|---|---|---|
| **Run #** | **T**_{**m**}**,°C** | **MI**^{**a**} | **HLMI**^{**b**} |
| 33 | 137.0 | 0 | 0 |
| 34 | 138.8 | 0 | 0 |
| 35 | 139.6 | 0 | 0 |
| 36 | 139.3 | 0 | 0 |
| 37 | 136.1 | - | - |
| 38 | - | - | - |
| 39 | - | - | - |
| 40 | 141.4 | 0 | 0 |
| 41 | 137.6 | 0 | 0 |

| | | | |
|---|---|---|---|
| ^{a}Melt Index (ASTM D-1238, Condition E) | | | |
| ^{b} High Load Melt Index (ASTM D-1238, Condition F) | | | |

## Claims

1. A catalyst system for the homopolymerization and copolymerization of alpha-olefins having 2-8 carbon atoms, said catalyst system comprising a cyclopentadienyl chromium hydrocarbyl compound in which the chromium has an oxidation state of +3, said chromium compound being supported on an inorganic support, said catalyst system having additionally an aluminoxane co-catalyst.

2. The catalyst system of claim 1 wherein the hydrocarbyl is sigma bonded to chromium.

3. The catalyst system of claims 1 or 2 wherein the chromium compound has the formula:
(C₅(R')₅)ₐCrX_{b}(L) (I)
[(C₅(R')₅)ₐCrX_{b}]_{c} (II)
or
[(C₅(R')₅)ₐCrX_{b}(L)ₘ]⁺ [A]⁻ (III)
wherein
(C₅(R')₅) is a cyclopentadienyl or substituted cyclopentadienyl ring;
R' is at each independent occurrence hydrogen, a hydrocarbyl radical having 1-20 carbon atoms, or adjacent R' groups may together form one or more rings;
X is a hydrocarbyl radical having 1-20 carbon atoms;
a = 1 or 2, b = 1 or 2 where a+b = 3;
c = 1 or 2 with the proviso that when c = 2 then X is alkyl;
L is at each independent occurrence a sigma donor stabilizing ligand;
m = 1 to 2 inclusive; and
A is an anion.

4. The catalyst system of Claim 3 wherein the chromium compound is selected from
Cp*Cr(CH₃)₂(THF)
[Cp*Cr(CH₃)₂]₂
[Cp*Cr(THF)₂CH₃]+ [BPh₄]⁻
Cp*Cr(Bzyl)₂(THF)
Cp*Cr(TMSM)₂
Cp*Cr(CH₃)₂(Pyr)
Cp*Cr(TMSM)₂(Pyr)
Cp*Cr(Bzyl)₂(Pyr)
where Cp* is pentamethylcyclopentadienyl, THF is tetrahydrofuran, Ph is phenyl, Bzyl is benzyl, TMSM is trimethylsilylmethyl and Pyr is pyridine.

5. The catalyst system of claim 1 or 2 wherein the support is an inorganic metal oxide or inorganic metal phosphate.

6. The catalyst system of Claim 5 wherein the support is selected from the group consisting of alumina, silica, silica-alumina, aluminum phosphate, zirconium phosphate, and alumina aluminum phosphate.

7. The catalyst system of Claim 6 wherein the support is selected from silica, aluminum phosphate and alumina aluminum phosphate.

8. The catalyst system of Claim 7 wherein the support is alumina aluminum phosphate.

9. The catalyst system of Claim 1 wherein the chromium compound is selected from
Cp*Cr(CH₃)₂(THF)
[Cp*Cr(CH₃)₂]₂
[Cp*Cr(THF)₂CH₃]+ [BPh₄]⁻
Cp*Cr(Bzyl)₂(THF)
or
Cp*Cr(TMSM)₂,
Cp*Cr(CH₃)₂(Pyr)
Cp*Cr(TMSM)₂(Pyr)
Cp*Cr(Bzyl)₂(Pyr)
the support is silica or alumina, aluminum phosphate.

10. The catalyst system of Claim 9, wherein the support is alumina aluminum phosphate.

11. A process for the homopolymerization or copolymerization of alpha-olefins comprising polymerizing said alpha-olefin, or copolymerizing two or more alpha-olefins in the presence of a catalyst system comprising a cyclopentadienyl chromium hydrocarbyl compound in which the chromium has an oxidation state of +3, said chromium compound being supported on an inorganic support, and said catalyst system further comprising an aluminoxane compound.

12. The process of claim 11, wherein the alpha-olefins have 2 to 8 carbon atoms.

13. The process of claim 11 or 12, using a catalyst system of one or more of claims 1 to 10.

## Patentansprüche

1. Katalysatorsystem für die Homopolymerisation und Copolymersation von Alpha-Olefinen mit 2 bis 8 Kohlenstoffatomen, wobei das Katalysatorsystem eine Cyclopentadienyl-Chrom-Kohlenwasserstoffverbindung enthält, wobei das Chrom in der Oxidationsstufe +3 ist, die Chrom-Verbindung auf einem anorganischen Träger ist und wobei das Katalysatorsystem weiterhin einen Aluminoxan-Cokatalysator besitzt.

2. Katalysatorsystem nach Anspruch 1, wobei der Kohlenwasserstoff an das Chrom sigma-gebunden ist.

3. Katalysatorsystem nach Anspruch 1 oder 2, wobei die Chromverbindung die Formel hat:
(C₅(R')₅)ₐCrX_{b}(L) (I)
[(C₅(R')₅)ₐCrX_{b}]_{c} (II)
oder
[(C₅(R')₅)ₐCrX_{b}(L)m]+ [A]- (III)
wobei
(C₅(R')₅) ein Cyclopentadienyl oder ein substituierter Cyclopentadienylring ist;
R' jeweils unabhängig ein Wasserstoffatom, ein Kohlenwasserstoffradikal mit 1 bis 20 Kohlenstoffatomen ist oder benachbarte R'-Gruppen zusammen einen oder mehrere Ringe bilden;
X ein Kohlenwasserstoffradikal mit 1 bis 20 Kohlenstoffatomen ist;
a=1 oder 2 ist, b=1 oder 2 ist, wobei a+b=3 ist;
c=1 oder 2 ist, vorausgesetzt, daß X Alkyl ist, wenn C=2 ist;
L jeweils unabhängig ein Sigmadonor-Stabilisierungsligand ist;
m=1 bis einschließlich 2 ist; und
A ein Anion ist.

4. Katalysatorsystem nach Anspruch 3, wobei die Chrom-verbindung gewählt ist aus:
Cp*Cr(CH₃)₂(THF)
[Cp*Cr(CH₃)₂]₂
[Cp*Cr(THF)₂CH₃]⁺ [BPh₄]⁻
Cp*Cr(Bzyl)₂(THF)
Cp*Cr(TMSM)₂
Cp*Cr(CH₃)₂ (Pyr)
Cp^{∗}Cr (TMSM)₂(Pyr)
Cp*Cr(Bzyl)₂(Pyr)
wobei Cp* Pentamethylcyclopentadienyl ist, THF Tetrahydrofuran ist, Ph Phenyl ist, Bzyl Benzyl ist, TMSM Trimethylsilylmethyl ist und Pyr Pyridin ist.

5. Katalysatorsystem nach Anspruch 1 oder 2, wobei der Träger ein anorganisches Metalloxid oder ein anorganisches Metallphosphat ist.

6. Katalysatorsystem nach Anspruch 5, wobei der Träger gewählt ist aus der Gruppe mit Aluminiumoxid, Siliciumoxid, Siliciumoxid-Aluminiumoxid, Aluminiumphosphat, Zirkoniumphosphat und Aluminiumoxid-Aluminiumphosphat.

7. Katalysatorsystem nach Anspruch 6, wobei der Träger gewählt ist aus Siliciumoxid, Aluminiumphosphat und Aluminiumoxid-Aluminiumphosphat.

8. Katalysatorsystem nach Anspruch 7, wobei der Träger Aluminiumoxid-Aluminiumphosphat ist.

9. Katalysatorsystem nach Anspruch 1, wobei die Chromverbindung gewählt ist aus:
Cp*Cr(CH₃)₂(THF)
[Cp*Cr(CH₃)₂]₂
[Cp*Cr (THF)₂CH₃]⁺ [BPh₄]⁻
Cp*Cr(Bzyl)₂(THF)
oder
Cp*Cr(TMSM)₂
Cp*Cr(CH₃)₂(Pyr)
Cp*Cr(TMSM)₂(Pyr)
Cp*Cr(Bzyl)₂(Pyr)
und der Träger Siliciumoxid oder Aluminiumoxid-Aluminiumphosphat ist.

10. Katalysatorsystem nach Anspruch 9, wobei der Träger Aluminiumoxid-Aluminiumphosphat ist.

11. Verfahren zur Homopolymerisation oder Copolymerisation von Alpha-Olefinen mit 2 bis 8 Kohlenstoffatomen, umfassend das Polymerisieren eines Alpha-Olefins oder das Copolymerisieren von zwei oder mehreren Alpha-Olefinen in Gegenwart eines Katalysatorsystems, beinhaltend eine Cyclopentadienyl-Chrom-Kohlenwasserstoffverbindung mit Chrom in der Oxidationsstufe +3, wobei die Chrom-Verbindung auf einem anorganischen Träger ist und das Katalysatorsystem weiterhin eine Aluminoxan-Verbindung umfaßt.

12. Verfahren nach Anspruch 11, wobei die Alpha-Olefine 2 bis 8 Kohlenstoffatome haben.

13. Verfahren nach Anspruch 11 oder 12, wobei ein Katalysatorsystem nach einem oder mehreren der Ansprüche 1 bis 10 verwendet wird.

## Revendications

1. Système de catalyseur pour l'homopolymérisation et la copolymérisation d'alpha-oléfines ayant de 2 à 8 atomes de carbone, ledit système de catalyseur comprenant un composé hydrocarbylique de cyclopentadiényl-chrome dans lequel le chrome a un degré d'oxydation de +3, ledit composé de chrome étant supporté sur un support inorganique, ledit système de catalyseur ayant en outre un co-catalyseur aluminoxane.

2. Système de catalyseur selon la revendication 1, dans lequel le groupe hydrocarbyle est lié au chrome par une liaison sigma.

3. Système de catalyseur selon la revendication 1 ou 2, dans lequel le composé de chrome a la formule :
(C₅(R')₅)ₐCrX_{b}(L) (I)
[(C₅(R')₅)ₐCrX_{b}]_{c} (II)
ou
[(C₅(R')₅)ₐCrX_{b}(L)ₘ]⁺[A]⁻ (III)
dans laquelle
(C₅(R')₅) est un cycle cyclopentadiényle ou cyclopentadiényle substitué;
R' représente, à chaque fois qu'il apparaît indépendamment, un atome d'hydrogène, un radical hydrocarbyle ayant de 1 à 20 atomes de carbone, ou des groupes R' adjacents peuvent former ensemble un ou plusieurs cycles;
X est un radical hydrocarbyle ayant de 1 à 20 atomes de carbone;
a = 1 ou 2, b = 1 ou 2 avec a+b = 3;
c = 1 ou 2 à condition que lorsque c = 2 alors X est un groupe alkyle;
L représente, à chaque fois qu'il apparaît indépendamment, un ligand donneur sigma stabilisateur;
m = 1 à 2 inclus; et
A est un anion.

4. Système de catalyseur selon la revendication 3, dans lequel le composé de chrome est choisi parmi :
Cp*Cr(CH₃)₂(THF)
[Cp*Cr (CH₃)₂]₂
[Cp*Cr(THF)₂CH₃]⁺ [BPh₄]⁻
Cp*Cr(Bzyl)₂(THF)
Cp*Cr(TMSM)₂
Cp*Cr(CH₃)₂ (Pyr)
Cp*Cr (TMSM)₂ (Pyr)
Cp*Cr(Bzyl)₂(Pyr)
où Cp* est le groupe pentaméthylcyclopentadiényle, THF est le tétrahydrofuranne, Ph est le groupe phényle, Bzyl est le groupe benzyle, TMSM est le groupe triméthylsilylméthyle et Pyr est la pyridine.

5. Système de catalyseur selon la revendication 1 ou 2, dans lequel le support est un oxyde métallique inorganique ou un phosphate métallique inorganique.

6. Système de catalyseur selon la revendication 5, dans lequel le support est choisi parmi le groupe constitué de l'alumine, la silice, la silice-alumine, le phosphate d'aluminium, le phosphate de zirconium, et le phosphate d'aluminium-alumine.

7. Système de catalyseur selon la revendication 6, dans lequel le support est choisi parmi la silice, le phosphate d'aluminium et le phosphate d'aluminium-alumine.

8. Système de catalyseur selon la revendication 7, dans lequel le support est le phosphate d'aluminium-alumine.

9. Système de catalyseur selon la revendication 1, dans lequel le composé de chrome est choisi parmi :
Cp*Cr (CH₃)₂ (THF)
[Cp*Cr(CH₃)₂]₂
[Cp*Cr (THF)₂CH₃] ⁺ [BPh₄]⁻
Cp*Cr(Bzyl)₂(THF)
ou
Cp*Cr (TMSM)₂,
Cp*Cr(CH₃)₂(Pyr)
Cp*Cr(TMSM)₂(Pyr)
Cp*Cr(Bzyl)₂(Pyr)
le support est la silice ou le phosphate d'aluminium-alumine.

10. Système de catalyseur selon la revendication 9, dans lequel le support est le phosphate d'aluminium-alumine.

11. Procédé d'homopolymérisation ou de copolymérisation d'alpha-oléfines comprenant :
la polymérisation de ladite alpha-oléfine, ou la copolymérisation de deux alpha-oléfines ou plus en présence d'un système de catalyseur comprenant un composé hydrocarbylique de cyclopentadiényl-chrome dans lequel le chrome a un degré d'oxydation de +3, ledit composé de chrome étant supporté sur un support inorganique, et ledit système de catalyseur comprenant en outre un composé aluminoxane.

12. Procédé selon la revendication 11, dans lequel les alpha-oléfines ont de 2 à 8 atomes de carbone.

13. Procédé selon la revendication 11 ou 12, utilisant un système de catalyseur selon une ou plusieurs des revendications 1 à 10.
